# EUROPÄISCHE PATENTANMELDUNG

(11) **EP 0 999 680 A1**
(43) Veröffentlichungstag der Anmeldung: **10.05.2000**
(21) Anmeldenummer: 99121625.0
(22) Anmeldetag: 30.10.1999
(51) Int. Cl.: H04M 1/02

(54) **Mobilfunkgerät**

(30) Priorität: 06.11.1998 DE 19851216
(71) Anmelder: ROBERT BOSCH GMBH, 70442 Stuttgart (DE)
(72) Erfinder: Hasemann, Joerg-Michael, 27339 Riede (DE)

(57) **Zusammenfassung**

Es wird ein Funkgerät (1), insbesondere ein Mobiltelefon vorgeschlagen, das Mittel zum Zusammenwirken mit einer Datenschnittstelle (5), insbesondere einer PCMCIA-Schnittstellenkarte (Personal Computer Memory Card International Association), umfaßt. Über die Datenschnittstelle (5) und das Funkgerät (1) sind Daten zwischen einer Datenverarbeitungsanlage (15), insbesondere einem Personal Computer oder Notebook, und einem Funktelekommunikationsnetz austauschbar. Die Mittel umfassen erste Anschlußkontakte (10), über die die Datenverarbeitungsanlage (15) an die Datenschnittstelle (5) anschließbar ist. Die Datenschnittstelle (5) kann dabei zumindest teilweise in das Funkgerät (1) integriert sein.

## Beschreibung

### Stand der Technik

Die Erfindung geht von einem Funkgerät nach der Gattung des Hauptanspruchs aus.

Aus dem "Handbuch für die Telekommunikation", Hrsg.: Volker Jung; Hans-Jürgen Warnecke, Springer-Verlag Berlin 1998 ist es bekannt, ein Mobilfunkgerät, beispielsweise das S4 von Siemens, über ein Kabel mit einer PCMCIA-Akapterkarte (Personal Computer Memory Card International Association) zum Anschluß von Notebook-Personal Computern zu verbinden. Mit entsprechender Sofware sind das Senden und Empfangen von Faxnachrichten und eine transparente Datenübertragung oder Datenabtrage mit bis zu 9600 Bit/s möglich.

### Vorteile der Erfindung

Das erfindungsgemäße Funkgerät mit den Merkmalen des Hauptanspruchs hat demgegenüber den Vorteil, daß das Funkgerät Mittel zum Zusammenwirken mit einer Datenschnittstelle umfaßt, wobei über die Datenschnittstelle und das Funkgerät Daten zwischen einer Datenverarbeitungsanlage und einem Funktelekommunikationsnetz austauschbar sind, und daß die Mittel erste Anschlußkontakte umfassen, über die die Datenverarbeitungsanlage an die Datenschnittstelle anschließbar ist. Auf diese Weise läßt sich die Datenschnittstelle über das Funkgerät an die Datenverarbeitungsanlage anschließen. Anstelle der Datenschnittstelle kann somit das Funkgerät zum Anschluß der Datenverarbeitungsanlage an die Datenschnittstelle in einen entsprechenden Eingabeschacht der Datenverarbeitungsanlage eingeführt werden. Eine Kabel- oder Infrarotanbindung des Funkgerätes an die Datenverarbeitungsanlage ist somit nicht mehr erforderlich.

Durch die in den Unteransprüchen aufgeführten Maßnahmen sind vorteilhafte Weiterbildungen und Verbesserungen des im Hauptanspruch angegebenen Funkgerätes möglich.

Besonders vorteilhaft ist es, daß die Datenschnittstelle zumindest teilweise in das Funkgerät integriert ist. Auf diese Weise ist auch zwischen Funkgerät und Datenschnittstelle keine Kabelverbindung erforderlich, so daß eine sehr kompakte Bauform erreicht wird. Durch die kompakte Bauform kann ein Benutzer auch in beengten Verhältnissen, z. B. in der Bahn, im Auto oder im Flugzeug komfortabel eine Datenverbindung zwischen seiner Datenverarbeitungsanlage und einem Funktelekommunikationsnetz aufbauen, ohne daß zusätzlicher Platzbedarf für das Abstellen des für die Datenverbindung erforderlichen Funkgerätes notwendig ist, da das Funkgerät mit der integrierten Datenschnittstelle in einen entsprechenden Eingabeschacht der Datenverarbeitungsanlage für die Datenkommunikation einlegbar ist.

Derselbe Vorteil ergibt sich auch dann, wenn die Datenschnittstelle zumindest teilweise in eine Aufnahme für einen Akkumulator des Funkgerätes einlegbar ist und die Aufnahme zweite Anschlußkontakte umfaßt, über die eine in der Aufnahme angeordnete Datenschnittstelle mit den ersten Anschlußkontakten kontaktierbar ist.

Besonders vorteilhaft ist es, daß die Datenschnittstelle nur bei von dem Funkgerät entfernten Akkumulator in die Aufnahme einlegbar ist. Auf diese Weise ist kein zusätzlicher Platzbedarf für die Unterbringung der Datenschnittstelle am oder im Funkgerät erforderlich, so daß ein entsprechender Eingabeschacht an der Datenverarbeitungsanlage zur Aufnahme des Funkgerätes möglichst klein gehalten werden kann.

Besonders vorteilhaft ist es auch, daß eine Stromversorgung des Funkgerätes durch die Datenverarbeitungsanlage über die ersten Anschlußkontakte erfolgt. Auf diese Weise ist es auch gar nicht erforderlich, daß der Akkumulator für den Betrieb des Funkgerätes mit der Datenschnittstelle am Funkgerät verbleibt, da die Stromversorgung über die Datenverarbeitungsanlage erfolgt.

### Zeichnung

Ein Ausführungsbeispiel der Erfindung ist in der Zeichnung dargestellt und in der nachfolgenden Beschreibung näher erläutert. Es zeigen Figur 1 ein Funkgerät mit ersten Anschlußkontakten, Figur 2 ein Funkgerät mit einer in eine Aufnahme für einen Akkumulator einlegbaren Datenschnittstelle und Figur 3 ein in eine Datenverarbeitungsanlage eingeführtes Funkgerät.

### Beschreibung des Ausführungsbeispiels

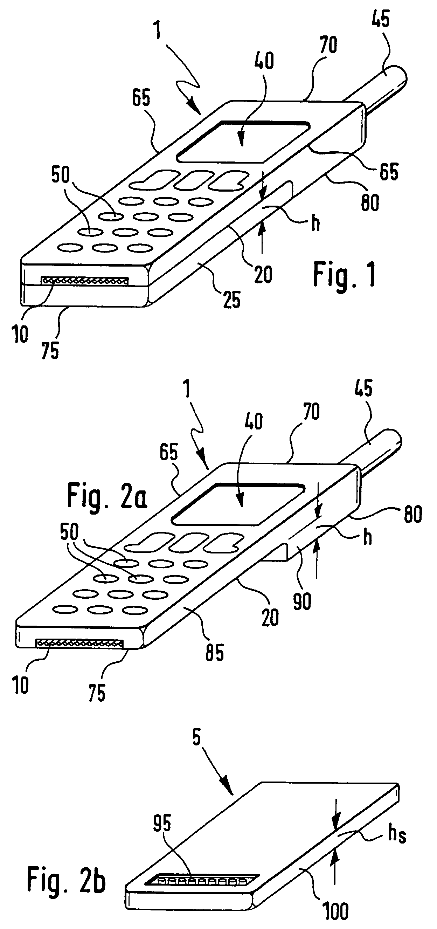

In Figur 1 kennzeichnet 1 ein Funkgerät, das beispielsweise als Mobilfunkgerät, als Mobiltelefon, als Schnurlostelefon, als Handfunkgerät, als Betriebsfunkgerät oder dergleichen ausgebildet sein kann. An einer Vorderseite 65 weist das Funkgerät 1 eine Tastatur 50 und eine Anzeigevorrichtung 40, insbesondere eine Flüssigkristallanzeige auf. An einer Oberseite 70 des Funkgerätes 1 ist eine Antenne 45 angeordnet. An einer Rückseite 80 des Funkgerätes 1 ist eine Aufnahme 20 zur Aufnahme eines Akkumulators 25 vorgesehen. Der Akkumulator 25 dient dabei der Stromversorgung des Funkgerätes 1 im mobilen Betrieb. An einer Unterseite 75 des Funkgerätes 1 sind oberhalb des Akkumulators 25 erste Anschlußkontakte 10 vorgesehen. Über die ersten Anschlußkontakte 10 ist eine Datenschnittstelle 5 kontaktierbar, deren elektronische Komponenten in das Funkgerät 1 vollständig integriert sein können. Die Datenschnittstelle 5 kann dabei beispielsweise als PCMCIA-Schnittstelle (Personal Computer Memory Card International Assiociation) ausgebildet sein.

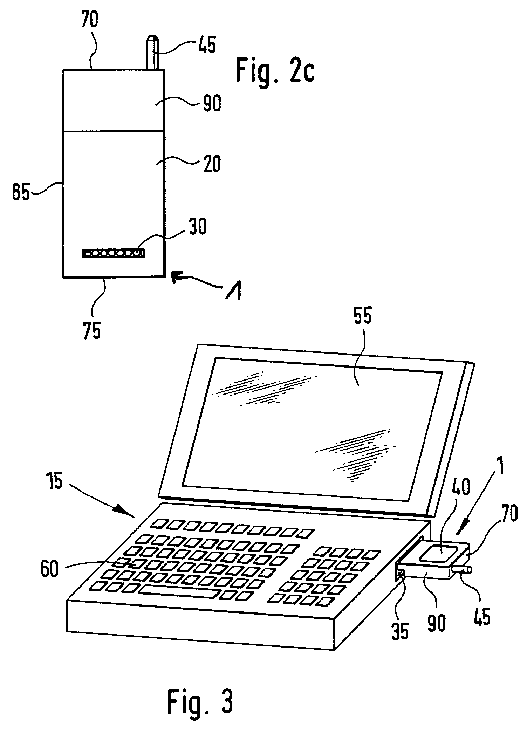

In Figur 2a) kennzeichnen gleich Bezugszeichen gleiche Elemente wie in Figur 1. Im Unterschied zu dem in Figur 1 dargestellten Funkgerät 1 ist beim Funkgerät 1 gemäß Figur 2 der Akkumulator 25 aus der Aufnahme 20 entfernt, so daß das Funkgerät 1 in einem der Unterseite 75 zugewandten unteren Bereich 85 um eine Höhe h des Akkumulators 25 dünner ausgebildet ist, als in einem der Oberseite 70 zugewandten oberen Bereich 90 des Funkgerätes 1. Anstelle einer vollständigen Integration der elektronischen Komponenten der Datenschnittstelle 5 in das Funkgerät 1 kann es auch vorgesehen sein, die Datenschnittstelle 5 mit ihren elektronischen Komponenten gemäß Figur 2b) als separate Schnittstellenkarte 100 vorzusehen, die eine Kontaktleiste 95 umfaßt. Bei aus der Aufnahme 20 entferntem Akkumulator 25 kann die Schnittstellenkarte 100 in die Aufnahme 20 eingelegt werden, wobei Kontakte der Kontaktleiste 95 mit zweiten Anschlußkontakten 30 in der Aufnahme 20 des Funkgerätes 1 gemäß Figur 2c) kontaktieren. Über die zweiten Anschlußkontakte 30 ist die Schnittstellenkarte 100 somit mit den ersten Anschlußkontakten 10 kontaktierbar. Es kann auch vorgesehen sein, daß ein Teil der elektronischen Bauelemente und Komponenten der Datenschnittstelle 5 in das Funkgerät 1 integriert ist und ein anderer Teil der elektronischen Komponenten und Bauelemente der Datenschnittstelle 5 auf der Schnittstellenkarte 100 angeordnet ist. Je nach verfügbarem Platz im Funkgerät 1 kann es erforderlich sein, einen Teil der elektronischen Bauelemente und Komponenten oder alle elektronischen Bauelemente und Komponenten der Datenschnittstelle 5 außerhalb des Funkgerätes 1 auf der separaten Schnittetellenkarte 100 anzuordnen. Die Befestigung der Schnittstellenkarte 100 in der Aufnahme 20 kann analog zur Befestigung des Akkumulators 25 in der Aufnahme 20 beispielsweise mittels Rastelementen erfolgen. Es kann vorgesehen sein, daß die Schnittstellenkarte 100 nur bei aus der Aufnahme 20 entferntem Akkumulator 25 in die Aufnahme 20 einlegbar ist.

Gemäß Figur 3 ist eine Datenverarbeitungsanlage 15, insbesondere ein Personal Computer, ein Notebook, ein Laptop oder dergleichen dargestellt. Die Datenverarbeitungsanlage 15 umfaßt dabei ein Tastatur 60 und eine insbesondere aufklappbar ausgeführte Anzeigevorrichtung 55. An einer Seitenfläche der Datenverarbeitungsanlage 15 ist ein Eingabeschacht 35 vorgesehen. In den Eingabeschacht 35 ist der untere Bereich 85 des Funkgerätes 1 eingeführt, so daß der obere Bereich 90 mit der Antenne 45 und der Anzeigevorrichtung 40 des Funkgerätes 1 aus dem Eingabeschacht 35 hervorragt. Somit ist die Datenverarabeitungsanalge 15 über die ersten Anschlußkontakte 10 an die Datenschnittstelle 5 anschließbar. Auf diese Weise kann ein Datenaustausch zwischen der Datenverarbeitungsanlage 15 und einem Funktelekommunikationsnetz über die Datenschnittstelle 5 und das Funkgerät 1 erfolgen. Wenn das Funkgerät 1 in der beschriebenen Weise in den Eingabeschacht 35 gemäß Figur 3 eingeführt ist, so kann die Stromversorgung des Funkgerätes 1 durch die Datenverarbeitungsanlage 15 über die ersten Anschlußkontakte 10 erfolgen. Somit ist die Verwendung des Akkumulators 25 zum Betrieb des Funkgerätes 1 im Eingabeschacht 35 der Datenverarbeitungsanlage 15 nicht erforderlich.

Für den Fall, daß die Datenscbnittstelle 5 vollständig in das Funkgerät 1 integriert ist, kann dann eine vergleichsweise kleine Höhe für den Eingabeschacht 35 realisiert werden, so daß bei der Datenverarbeitungsanlage 15 kein zusätzlicher Platzbedarf entsteht. Für den Fall, daß die elektronischen Bauelemente und Komponenten der Datenschnittstelle 5 zumindest teilweise auf der Schnittstellenkarte 100 in der Aufnahme 20 angeordnet sind, ist eine etwas größere Höhe des Eingabeschachtes 35 für die Einführung des Funkgerätes 1 erforderlich. Bei Ausbildung der Datenschnittstelle 5 als PCMCIA-Schnittstelle ist gemäß Figur 2b) für die Schnittstellenkarte 100 eine maximale Höhe h_{S} von beispielsweise 10,5 mm für sogenannte Typ 3 PCMCIA-Schnittstellen gemäß dem "Handbuch für die Telekommunikation", Hrsg.: Volker Jung, Hans-Jürgen Warnecke, Springer-Verlag 1998, Berlin vorgesehen. Dabei ist die Höhe h_{S} der Schnittstellenkarte 100 in der Regel kleiner als die Höhe h des Akkumulators 25.

Es kann auch vorgesehen sein, die ersten Anschlußkontakte 10 und die Datenschnittstelle 5 an anderer Stelle im Funkgerät 1 in Analogie zum beschriebenen Ausführungsbeispiel vorzusehen.

## Patentansprüche

1. Funkgerät (1), insbesondere Mobiltelefon, das Mittel zum Zusammenwirken mit einer Datenschnittstelle (5), insbesondere einer PCMCIA-Schnittstellenkarte (Personal Computer Memory Card International Association), umfaßt, wobei über die Datenschnittstelle (5) und das Funkgerät (1) Daten zwischen einer Datenverarbeitungsanlage (15), insbesondere einem Personal Computer oder ein Notebook, und einem Funktelekommunikationsnetz austauschbar sind, **dadurch gekennzeichnet**, daß die Mittel erste Anschlußkontakte (10) umfassen, über die die Datenverarbeitungsanlage (15) an die Datenschnittstelle (5) anschließbar ist.

2. Funkgerät (1) nach Anspruch 1, dadurch gekennzeichnet, daß die Datenschnittstelle (5) zumindest teilweise in das Funkgerät (1) integriert ist.

3. Funkgerät (1) nach Anspruch 1 oder 2, dadurch gekennzeichnet, daß die Datenschnittstelle (5) zumindest teilweise in eine Aufnahme (20) für einen Akkumulator (25) des Funkgerätes (1) einlegbar ist und daß die Aufnahme (20) zweite Anschlußkontakte (30) umfaßt, über die eine in der Aufnahme (20) angeordnete Datenschnittstelle (5) mit den ersten Anschlußkontakten (10 kontaktierbar ist.

4. Funkgerät (1) nach Anspruch 3, dadurch gekennzeichnet, daß die Datenschnittstelle (5) nur bei von dem Funkgerät (1) entfernten Akkumulator (25) in die Aufnahme (20) einlegbar ist.

5. Funkgerät (1) nach einem der vorherigen Ansprüche, dadurch gekennzeichnet, daß eine Stromversorgung des Funkgerätes (1) durch die Datenverarbeitungsanlage (15) über die ersten Anschlußkontakte (10) erfolgt.

6. Funkgerät (1) nach Anspruch 5, dadurch gekennzeichnet, daß die Stromversorgung bei in einen Eingabeschacht (35) der Datenverarbeitungsanlage (15) eingeführtem Funkgerät (1) erfolgt.
